# EUROPEAN PATENT SPECIFICATION

(11) **EP 2 648 310 B1**
(45) Date of publication and mention of the grant of the patent: **16.11.2016**
(21) Application number: 12464004.6
(22) Date of filing: 02.04.2012
(51) Int. Cl.: H02J 7/00, H02H 11/00

(54) **Reverse battery protection monolithic device**
Monolithische Vorrichtung zum Umkehrbatterieschutz
Dispositif monolithique de protection de batterie inverse

(43) Date of publication of application: 09.10.2013
(73) Proprietor: Continental Automotive GmbH, 30165 Hannover (DE)
(72) Inventor: Horatiu, Pintilie, Prof., 720176 Iasi (RO)

(56) References cited:
- EP-A1- 0 736 950
- DE-A1- 10 059 800
- US-A1- 2002 024 784
- US-A1- 2005 258 805
- US-B1- 6 608 470

## Description

### Field of invention

The present invention relates to the field of protecting units which are powered by an electrical power source, such as a car battery, against being damaged in case the connections to or from the electrical power source are reversed.

### Art Background

Existing systems and methods for protecting electrically powered units against reverse voltage application rely on the use of MOSFET transistors (or generically, controlled semiconductor components that provide a very good conductivity, i.e. a very low resistance close to 0 (zero), while supplied with the correct polarity voltage and, on the other hand, a very high resistance (close to infinite) when reversed polarity voltage is applied).

However, these known solutions rely on use of very expensive components (e.g. high current MOSFETs for power applications) with complicated and complex circuitry for controlling the gate. In addition to the high cost, the complexity of the circuitry also causes a high rate of failure occurrence due to the large number of components.

US Patent Application Publication Number US 2005/0258805 relates to devices and methods for protection of rechargeable elements. In particular, US 2005/0258805 offers solutions for overvoltage limitation by means of PTC (Positive Temperature Coefficient) and thermally coupled elements. However, the document does not consider the issue of protecting devices against reverse battery connection, i.e. the case where the battery voltage is reversely applied to the device.

In EP 0736950 A1, a circuit is shown, in which a varistor and a PCT thermistor are combined in series such that in case of current overload, the thermistor changes to a high resistivity in order to protect the varistor. A diode can be placed in parallel to the varistor, such that in the case of a polarity reversal, the diode cunducts directly urging to thermistor to instantaneously increasing its resistance by the effect of the short circuit current passing through it.

In US 2005/0258805 A1, a battery charger is described, in which a PTC thermistor is thermally coupled with a semiconductor, in particular a zener diode or a MOSFET of a shunt regulator in order to generate heat by way of the semiconductor, which is transferred to the PTC thermistor.

In US 6,608,470 B1, an overcharge protection device is shown, in which a thermistor prevents thermal damage to a voltage regulator, wherein the voltage regulator is thermally coupled to the thermistor.

There may be a need for a simple and cheap way of protecting electric devices against reverse voltage application.

### Summary of the Invention

This need may be met by the subject matter according to the independent claims. Advantageous embodiments of the present invention are set forth in the dependent claims.

According to a first aspect of the invention, there is provided a device for protecting electrically powered units against a reverse application of a power supply. The device comprises (a) a first input terminal adapted to be connected to a first terminal of the power supply, (b) a second input terminal adapted to be connected to a second terminal of the power supply, (c) an output terminal, (d) a PTC element arranged between the first input terminal and the output terminal, and (e) a heating element thermally coupled to the PTC element and adapted to increase the temperature of the PTC element in case the first input terminal is connected to the second terminal of the power supply and the second input terminal is connected to the first terminal of the power supply, thereby causing an increased electrical resistance between the first input terminal and the output terminal.

This aspect of the invention is based on the idea that when a power supply is accidentally connected in reverse order to the first input terminal and the second input terminal, the heating element will rapidly increase the temperature of the PTC element via thermal coupling such that the electrical resistance between the device's first terminal and output terminal will increase significantly and thereby virtually isolate the first terminal from the output terminal.

In the present context, "power supply" may in particular denote a battery for a motorized vehicle, including batteries for vehicles comprising combustion engines as well as batteries for vehicles with hybrid or purely electric engines.

Further, "reverse application of a power supply" may in particular denote that a plus-terminal of the power supply is connected to a minus-terminal of the device and a minus-terminal of the power supply is connected to a plus-terminal of the device.

Further, "electrically powered units" may in particular denote any electric, electronic or electro-mechanic device that is driven by a power source, such as a battery, a power source of a motorized vehicle, or any source of electrical energy. Examples of such "electrically powered units" in relation to motorized vehicles include starter engines, fuel injection systems, alarm systems, vehicle control systems, computers, electromotors for mirrors and seats, etc.

The first input terminal may preferably be designed to be connected to a first terminal of the power supply, such as a positive or plus terminal of the power supply. This design may involve a particular physical shape and/or a marking by color (e.g. red) and/or text (e.g. "+"). Similarly, the second input terminal may preferably be designed to be connected to a second terminal of the power supply, such as a negative or minus terminal of the power supply. Also this design may involve a particular shape and/or a marking by color (e.g. black) and/or text (e.g. "-").

The output terminal may preferably be designed to be connected to an input terminal of one or more electrically powered units that are to be protected against a reverse application of the power supply.

The PTC element is arranged such that it provides an electrical resistance between the first input terminal and the output terminal. This electrical resistance thus changes as a function of the temperature of the PTC element. More specifically, the PTC element provides a very low resistance at and below normal operating temperature (i.e. when the power source is correctly applied), and a steeply increasing resistance with increasing temperature above a certain temperature (switching temperature) which is preferably selected to be somewhat higher than the normal operating temperature in order to avoid malfunction and/or self-heating.

The thermal coupling between the heating element and the PTC element may preferably be constituted by a metal or another material with good thermal transfer properties, or by a fluid, such as air.

According to a further embodiment of the invention, the heating element comprises a first resistor arranged between the second input terminal and the output terminal, and/or the heating element comprises a second resistor arranged between the second input terminal and the first input terminal.

The first and/or second resistor may be selected from a wide variety of electronic components which, by exhibiting a fixed or variable resistive characteristic, are suitable for acting as heaters of the PTC element.

The first resistor may be arranged such that a significant amount of current runs through it in case of reverse application of the power supply whereas practically no current runs through it in case of correct application of the power supply. Similarly, the second resistor may be arranged such that a significant amount of current runs through it in case of reverse application of the power supply whereas practically no current runs through it in case of correct application of the power supply. Thus, in case of reverse application of the power supply, the current flowing in the first resistor and/or the second resistor will cause heat to be transferred to the PTC element.

When current is flowing through the first resistor, some voltage (although significantly less than without the protective device) will be present between the output terminal and the second input terminal due to the voltage drop across the first resistor. Thus, in case of very sensitive electrically powered units, it may be beneficial to additionally or only use the second resistor such that virtually no voltage will exist between the output terminal and the second input terminal.

According to a further embodiment of the invention, the device further comprises a diode arranged between the second input terminal and the first resistor and/or between the second input terminal and the second resistor.

The diode is preferably arranged such that current will flow from the second input terminal and through the first resistor and/or the second resistor only in case of reverse application of the power supply.

The combination of resistor (first resistor and/or second resistor) and diode provides a very simple, yet very efficient way of rapidly increasing the temperature of the PTC element.

According to a further embodiment of the invention, the device further comprises a transistor arranged between the second input terminal and the first resistor and/or between the second input terminal and the second resistor, the transistor being adapted to feed current to the first resistor and/or to the second resistor in case the first input terminal is connected to the second terminal of the power supply and the second input terminal is connected to the first terminal of the power supply.

The transistor may be arranged such that the voltage required to open the transistor is only applied to the relevant terminal (e.g. basis or gate) of the transistor in case of reverse application of the power supply. This may preferably be achieved by a voltage divider arranged between the first input terminal and the second input terminal.

Accordingly, the combination of resistor (first resistor and/or second resistor) and transistor provides a simple, yet very efficient way of rapidly increasing the temperature of the PTC element.

According to a further embodiment of the invention, the device further comprises a differential amplifier adapted to provide a control voltage representative of a voltage difference between the output terminal and a reference voltage to the transistor, thereby causing the transistor to feed current to the first resistor and/or to the second resistor when said voltage difference exceeds a predetermined voltage value.

In comparison to the embodiments relying on a diode or a transistor controlled by a voltage divider, this embodiment may be able to react to very small possibly damaging voltages between the output terminal and the second input terminal. In this regard, it is noted that a diode may require a voltage of 0,6 V or more to open whereas the reference voltage for the differential amplifier may be chosen such that current is fed to the heating element even if a voltage difference of only 50 mV or less is present between the output terminal and the second input terminal.

According to a further embodiment of the invention, the device further comprises a temperature detector for detecting a temperature in the vicinity of the PTC element, and a limiting element adapted to reduce the feeding of current by the transistor in case the temperature detected by the temperature detector exceeds a predetermined temperature value.

The temperature detector may preferably be an NTC thermistor, i.e. a Negative Temperature Coefficient element which has a decreasing resistance with increasing temperature.

The temperature detector may preferably be arranged in the vicinity of the PTC element such that it measures approximately the temperature of the PTC element.

The temperature detector and the limiting element constitute a self-protective mechanism preventing overheating of the device. This is particularly advantageous in case the electrically powered unit (which is to be protected) exhibits a high equivalent resistance at low voltages.

According to a further embodiment of the invention, the device is formed as a single monolithic device.

In the present context, "monolithic device" may particularly denote an integral device in the sense that the device is formed as a single component which can be mounted at a desired location depending on the specific application of the device. For example, the component may be mounted on a printed circuit board close to the power supply or close to or even within the electrically powered unit which the device is supposed to protect.

According to a further embodiment of the invention, the single monolithic device comprises a thermally insulating housing.

The thermally insulating housing may reduce or minimize loss of thermal energy to the surroundings. The thermally insulating housing may preferably be formed of a resin with low thermal conduction.

By reducing or minimizing the equivalent thermal capacity and the loss of thermal energy to the surroundings, the reaction time of the device is increased as the PTC element will be rapidly heated.

Furthermore, by avoiding loss of thermal energy to the surroundings, the temperature of the PTC element can be kept at a level which is sufficient to maintain the high resistance of the PTC element by providing only a small amount of thermal energy from the heating element.

According to a further embodiment of the invention, the PTC element has a resistance of 1 mΩ or less at temperatures below a first temperature threshold and a resistance of 1 MΩ or more at temperatures above a second temperature threshold.

The first temperature threshold may substantially correspond to the highest expected temperature of the PTC element during normal operation, i.e. when the power supply is correctly applied. Thus, the first temperature threshold is set high enough to prevent an increase in the resistance of the PTC element even if the surrounding temperature reaches a rather high value, such as on very warm summer days. The first temperature threshold may, depending on the particular application, be around 130°C (e.g. in automotive applications) or even higher. In other applications, the first temperature threshold may be around or below 50°C.

The second temperature threshold is higher than the first temperature threshold such that when the PTC element is heated to the second temperature threshold by the heating element due to a reverse application of the power supply, the high resistance of the PTC element substantially prevents current from flowing between the first input terminal and the output terminal. Furthermore, the second temperature threshold is close enough to the normal working temperature of the PTC element that the device is able to react fast to heat provided by the heating element in case of a reverse application of the power supply.

The difference between the second temperature threshold and the first temperature threshold may be within a range of 1°C to 10°C, such as between 2°C and 8°C, or such as between of 3°C and 6°C, or such as between 4°C and 5°C. Preferably, the difference between the second temperature threshold and the first temperature threshold may be 2°C to 3°C.

According to a second aspect of the invention, there is provided a method of protecting an electrically powered unit against reverse application of a power supply. The method comprises (a) detecting a reverse application of the power supply to the electrically powered unit, and (b) if a reverse application of the power supply is detected, increasing a temperature of a PTC element by means of a heating element which is thermally coupled to the PTC element, thereby causing an increased electrical resistance between a terminal of the power supply and a corresponding terminal of the electrically powered unit.

This aspect of the invention is based on the idea that when it is detected that a power supply is accidentally connected in reverse order to an electrically powered unit, the temperature of a PTC element is increased by means of a heating element which is thermally coupled to the PTC element such that an electrical resistance between a terminal of the power supply and a corresponding terminal of the electrically powered unit is caused to increase.

According to a third aspect of the invention, there is provided a control unit for a motorized vehicle having a vehicle electrical system. The control unit comprises a device according to the first aspect or any of the embodiments of the first aspect.

This aspect of the invention provides a control unit for a motorized vehicle with the capability of protecting units which are electrically powered via the vehicle's electrical system against accidental reverse application of a power supply. This capability is, as has been elaborated above, provided in a simple manner and consequently at low cost.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

Figure 1 shows a configuration including a protective device according to an embodiment.
Figure 2 shows a protective device according to an embodiment.
Figure 3 shows a protective device according to an embodiment.
Figure 4 shows a protective device according to an embodiment.
Figure 5 shows a protective device according to an embodiment.
Figure 6 shows a configuration including a protective device according to an embodiment.
Figure 7 shows a configuration including a protective device according to an embodiment.
Figure 8 shows a configuration including a protective device according to an embodiment.

### Detailed Description

The illustration in the drawing is schematically. It is noted that in different figures, similar or identical elements are provided with the same reference signs or with reference signs, which are different from the corresponding reference signs only within the first digit.

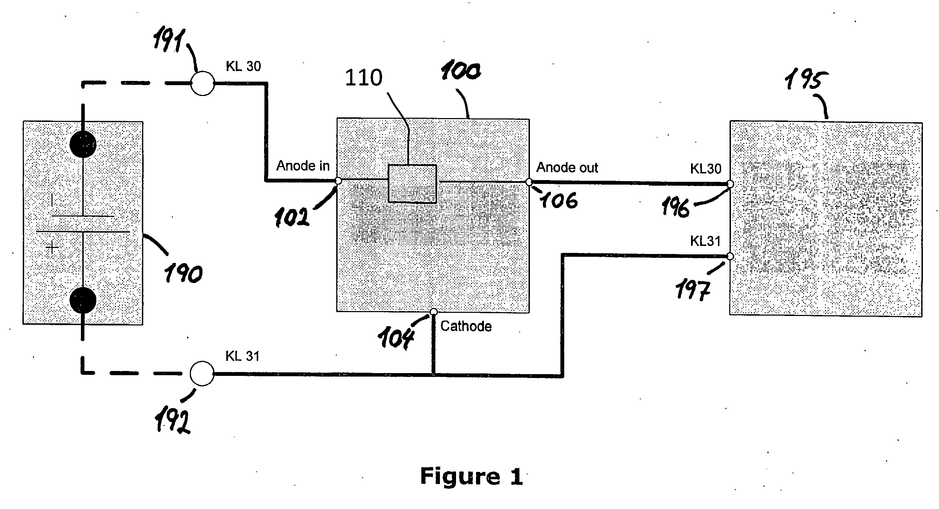

Figure 1 shows a configuration including a protective device 100. More specifically, Figure 1 shows the protective device 100 comprising a first input terminal (anode in) 102, a second input terminal (cathode) 104, and an output terminal (anode out) 106. The first input terminal 102 is connected to terminal 191 which is supposed to be connected to a positive terminal of a battery 190. The second input terminal 104 is connected to terminal 192, which is supposed to be connected to a negative terminal of the battery 190, and to terminal 197 of an electrically powered unit 195. The output terminal 106 is connected to terminal 196 of the electrically powered unit 195. The terminals 196 and 197 of the electrically powered unit are supposed to be connected to a suitable power supply, such as the battery 190.

In the configuration shown in Figure 1, the terminals of the battery 190 are mistakenly connected in reverse order (reverse application of the battery voltage), i.e. the positive terminal of the battery 190 is connected to terminal 192 and the negative terminal of the battery 190 is connected to terminal 191. In this particular configuration, the protective device 100 functions to assure that no (or only a minimal) current flows between the first input terminal 102 and the output terminal 106 by providing a very high electrical resistance between the first input terminal 102 and the output terminal 106. Furthermore, the protective device 100 functions to assure that the voltage drop between the terminals 196 and 197 of the electrically powered unit 195 is sufficiently low to protect the unit 195.

On the other hand, when the terminals of the battery 190 are connected in the intended order (i.e. reverse to the order shown in Figure 1), the protective device 100 will exhibit a very low electrical resistance between the first input terminal 102 and the output terminal 106 such that current may easily flow from the battery 190 to the electrically powered unit 195.

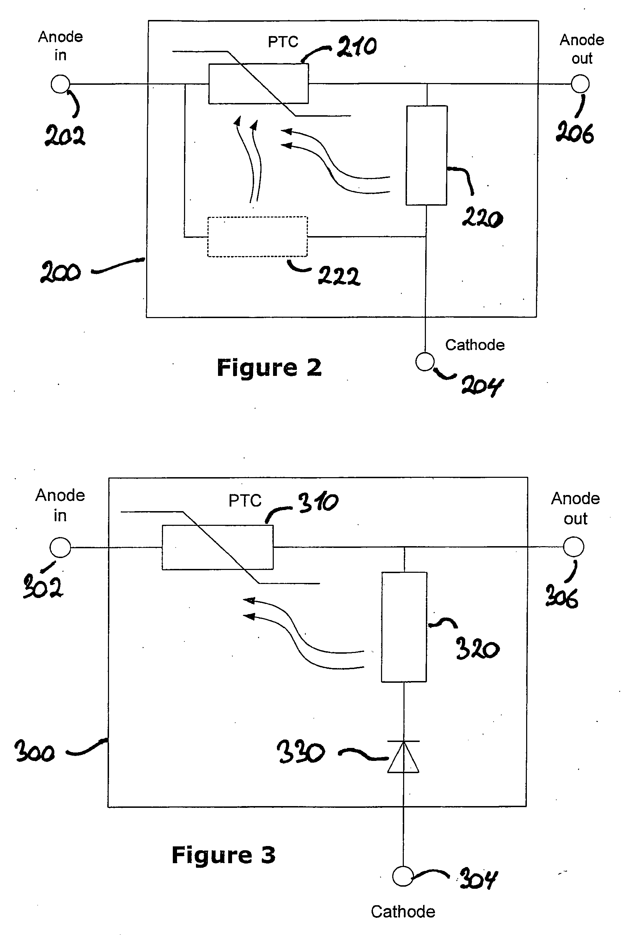

Figure 2 shows a protective device 200 according to an embodiment. Like the protective device 100 shown in Figure 1, the protective device 200 comprises a first input terminal (anode in) 202, a second input terminal (cathode) 204, and an output terminal (anode out) 206. A PTC element 210 is arranged between the first input terminal 202 and the output terminal 206. A first heating element in the form of resistor 220 is arranged between the second input terminal 204 and the output terminal. A further heating element in the form of resistor 222 is arranged between the first input terminal 202 and the second input terminal. It is explicitly stated that the embodiment can be realized with only the resistor 220, with only the resistor 222, or with both resistors 220 and 222.

The resistor 220 and/or the resistor 222 function as heating elements in case a power supply (not shown) is reversely applied to the first input terminal 202 and the second input terminal 204. In this case, current will flow through the heating element(s) and the produced thermal energy (heat) will increase the temperature of the PTC element 210. This causes a significant increase in electrical resistance between the first input terminal 202 and the output terminal 206 such that an electrically powered unit connected to the output terminal 206 and the second input terminal 204 of protective device 200 will be protected.

Figure 3 shows a protective device 300 according to an embodiment, which only differs from the protective device 200 shown in Figure 2 in that a diode 330 is inserted between the second input terminal 304 and the resistor 320.

The diode 330 assures that current only flows through the resistor 320 in case a power supply (not shown) is reversely applied.

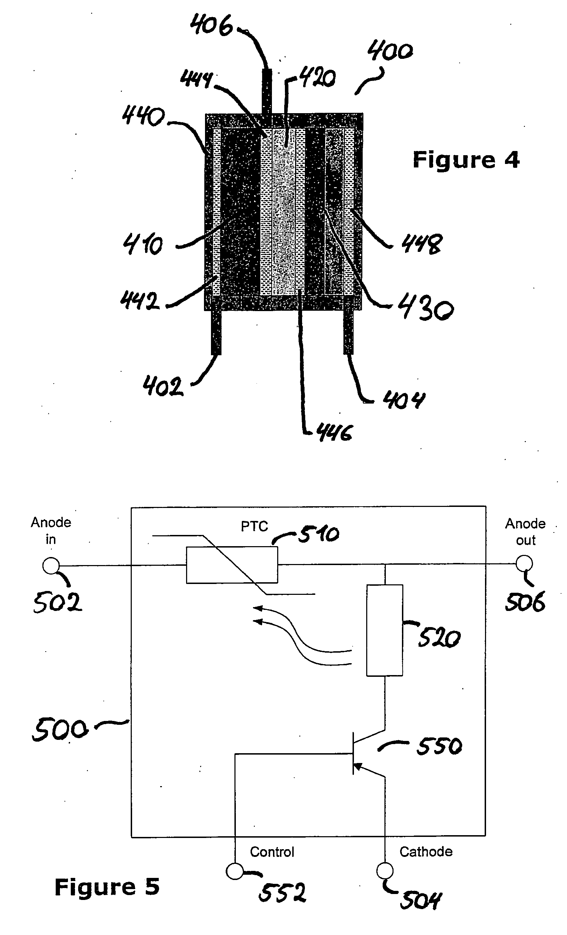

Figure 4 shows a protective device 400 corresponding to the protective device 300 shown in Figure 3. The protective device 400 is formed as a single integral (monolithic) unit which is formed within a housing 440 and comprises a first input terminal 402, a second input terminal 404 and an output terminal 406. The housing is preferably formed of glass or resin and has a very low thermal conductivity, such as around or below 0.1W/(m·K). The first input terminal 402 is formed as a pin connector and is connected to a metal layer 442. Similarly, the second input terminal 404 is formed as a pin connector and is connected to a metal layer 448, and the output terminal 406 is formed as a pin connector connected to a metal layer 444. A PTC element is arranged between the metal layer 442 and the metal layer 444, i. e. between the first input terminal 402 and the output terminal 406. A resistor (heating element) 420 is arranged on the other side of the metal layer 444, i.e. the side opposite to the PTC element 410. A further metal layer 446 connects the resistor 420 and a diode 430. The diode 430 may be formed as a PN junction, or a Schottky element, such as a SiC Schottky element. The diode is further connected to the metal layer 448 which in turn is connected to the second input terminal 404. Thereby, the structure of the protective device 300 shown in Figure 3 is implemented in a small package which is easy and cheap to manufacture.

Fig. 5 shows a protective device 500 which is identical to the protective device 300 shown in Figure 3 except for the diode 330 being replaced with a bipolar transistor 550. The basis terminal of the transistor 550 is connected to a control terminal 552.

In case of reverse application of a battery or other power supply (not shown), a control circuit (not shown) will provide a voltage to the control terminal 552 which is sufficient to cause the transistor to open, i.e. to bring the transistor into a conducting state. Thereby, current will flow through the resistor 520, the PTC element 510 will increase its electrical resistance, and an electrically powered unit (not shown) which is connected to the output terminal 506 and to the second input terminal 504 will be protected.

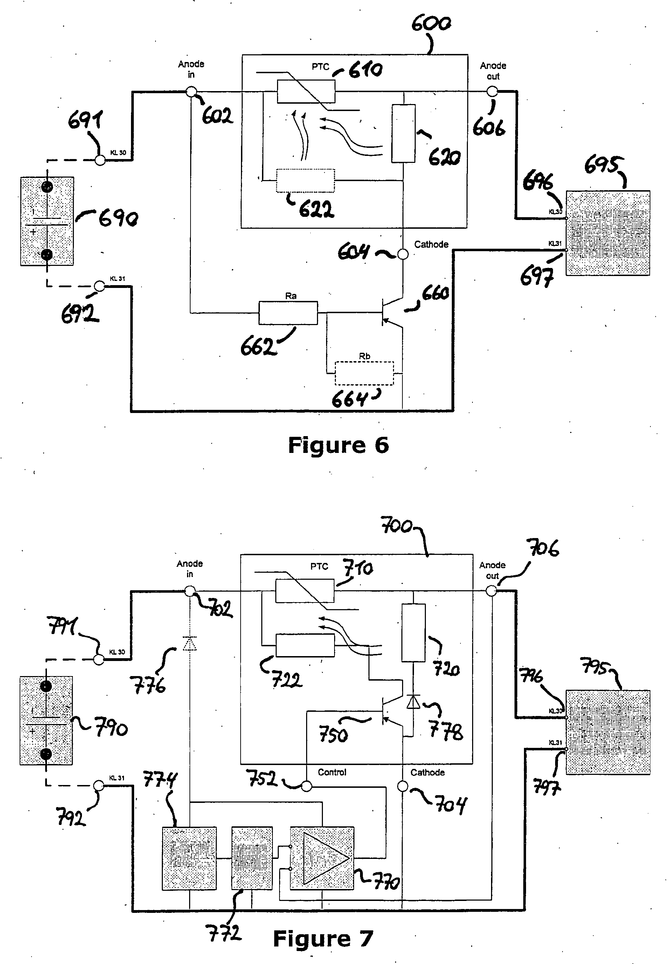

Figure 6 shows a protective device 600 which is identical to the protective device 500 shown in Figure 5 with the exception that the protective device 600 does not include an internal transistor 550. Instead, the second input terminal is connected to a collector terminal of an external transistor 660. Accordingly, the protective device 600 does not contain a control terminal similar to the control terminal 552 of the protective device 500. Instead, the protective device 600 is controlled by an external control circuit which is formed around the external transistor 660. More specifically, the basis voltage of the external transistor 660 is controlled by resistor 662 arranged between the first input terminal 602 of the protective device 600 and the basis terminal of the transistor 660. A further resistor 664 may optionally be arranged between the basis and emitter terminals of the external transistor 660. The emitter of the external transistor 660 is connected to terminal 692 which is supposed to be connected to the negative terminal of a battery 690. The battery 690 in Figure 6 is reversely applied. Further, the emitter of the external transistor 660 is connected to terminal 697 of electrically powered unit 695.

Figure 7 shows an implementation of a protective device 700 which, except for the second resistor (heating element) 722 and a diode 778 arranged between the second input terminal and the first resistor 720, has the same structure as the protective device 500 shown in Figure 5. The control input 752 of the protective device is connected to the output of a differential amplifier 770. The two inputs of the differential amplifier 770 are respectively connected to the output terminal 706 and an output from a voltage divider 772. The voltage divider 772 is arranged between voltage reference 774 and the second input terminal of the protective device 700. The voltage reference is arranged between the first input terminal 702 (via diode 776) and the second input terminal 704 of the protective device 700.

The voltage reference 774 and voltage divider 772 serve to provide a reference voltage as one input to the differential amplifier. Thereby, if the voltage at the output terminal exceeds a predetermined level, the output from differential amplifier 770, which is fed to the control terminal 752 of the protective device 700, will reach the voltage needed for switching the internal transistor 750 of the protective device 700 into its conducting state, thereby causing current to flow in the resistor 722 such that the resistance of the PTC element 710 rapidly increases.

By using the differential amplifier 770, voltage divider 772 and voltage reference 774 as an external control system, the protective device 700 becomes capable of protecting the electrically powered unit 795 against voltages that are so low that they would not on their own be sufficient to open the transistor 750 (or the diodes 330 and 430 shown in Figures 3 and 4).

Furthermore, the diode 778 and the first resistor 720 constitute a protective unit on their own which functions in parallel with the internal transistor 750 and the second resistor and in a manner similar to the protective device 300 shown in Figure 3. Thereby, if for any reason, one or more of the differential amplifier 770, voltage divider 772 and voltage reference 774 fails to control the internal transistor properly, the diode 778 and first resistor 720 may provide thermal energy to the PTC element 710 in order to provide the protective function.

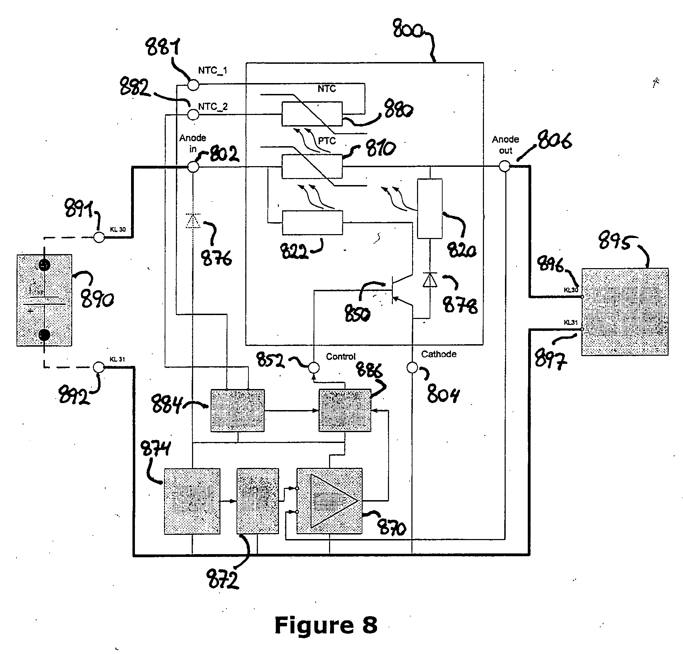

Figure 8 shows an implementation of a protective device 800 in a system which is very similar to the one shown in Figure 7. In addition to the elements of the protective device 700 shown in Figure 7, the protective device 800 includes a temperature sensor 880 which is arranged in the vicinity of PTC element 810 and is connected to a temperature measurement circuit 884 via terminals 891 and 892. The output from the temperature measurement circuit 884 is fed to a driver limiter 886 arranged between the output of the differential amplifier 870 and the control terminal 852.

The temperature sensor 880, temperature measurement circuit 884 and driver limiter 886 cooperate to limit the current flowing through internal transistor 850 and heating resistor 822 in case the temperature of the PTC element 810 exceeds a critical temperature. Thereby, damage to the PTC element 810 and other components of the protective device 800 can be prevented even if the battery 890 is kept in the reversely applied state for a substantial amount of time.

It is explicitly stated that all embodiments of protective devices discussed above may advantageously be put into practice as integral (monolithic) devices similar to the one shown in Figure 4 with adaptations as necessary for forming transistors instead of diodes and/or one or two heating resistors.

Furthermore, it is emphasized that the specific control components shown in the described embodiments may be replaced with other types of electronic components which may serve the same or similar purposes. For example, the illustrated PNP-transistors may be replaced with other types of transistors and/or the differential amplifier and reference voltage may be provided be implemented by means of an operational amplifier other custom components.

Many of the above described embodiments relate to applications in a motorized vehicle. However, is should be emphasized that the concept of the described protective device may be applicable to many other technical fields, such as e.g. power tools.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

Furthermore, there is described and claimed a Control unit for a motorized vehicle having a vehicle electrical system, where the control unit comprising a prescribed device (100, 200, 300, 400, 500, 600, 700, 800) according to any of claims 1 to 9.

### List of reference signs:

- 100: Device
- 102: First input terminal
- 104: Second input terminal
- 106: Output terminal
- 190: Battery
- 191: Terminal
- 192: Terminal
- 195: Electrically powered unit
- 196: Terminal
- 197: Terminal
- 200: Device
- 202: First input terminal
- 204: Second input terminal
- 206: Output terminal
- 210: PTC element
- 220: Resistor
- 222: Resistor
- 300: Device
- 302: First input terminal
- 304: Second input terminal
- 306: Output terminal
- 310: PTC element
- 320: Resistor
- 330: Diode
- 400: Device
- 402: First input terminal
- 404: Second input terminal
- 406: Output terminal
- 410: PTC element
- 420: Resistor
- 430: Diode
- 440: Housing
- 442: Metal layer
- 444: Metal layer
- 446: Metal layer
- 448: Metal layer
- 500: Device
- 502: First input terminal
- 504: Second input terminal
- 506: Output terminal
- 510: PTC element
- 520: Resistor
- 550: Transistor
- 552: Control terminal
- 600: Device
- 602: First input terminal
- 604: Second input terminal
- 606: Output terminal
- 610: PTC element
- 620: Resistor
- 622: Resistor
- 660: Transistor
- 662: Resistor
- 664: Resistor
- 690: Battery
- 691: Terminal
- 692: Terminal
- 695: Electrically powered unit
- 696: Terminal
- 697: Terminal
- 700: Device
- 702: First input terminal
- 704: Second input terminal
- 706: Output terminal
- 710: PTC element
- 720: Resistor
- 722: Resistor
- 750: Transistor
- 752: Control terminal
- 770: Differential amplifier
- 772: Voltage divider
- 774: Voltage reference
- 776: Diode
- 778: Diode
- 790: Battery
- 791: Terminal
- 792: Terminal
- 795: Electrically powered unit
- 796: Terminal
- 797: Terminal
- 800: Device
- 802: First input terminal
- 804: Second input terminal
- 806: Output terminal
- 810: PTC element
- 820: Resistor
- 822: Resistor
- 850: Transistor
- 852: Control terminal
- 870: Differential amplifier
- 872: Voltage divider
- 874: Voltage reference
- 876: Diode
- 878: Diode
- 880: Temperature sensor
- 881: Terminal
- 882: Terminal
- 884: Temperature measurement circuit
- 886: Driver limiter
- 890: Battery
- 891: Terminal
- 892: Terminal
- 895: Electrically powered unit
- 896: Terminal
- 897: Terminal

## Claims

1. Device for protecting electrically powered units (195, 695, 795, 895) against a reverse application of a power supply (190, 790, 890), the device comprising
a first input terminal (102, 202, 302, 402, 502, 602, 702, 802) adapted to be connected to a first terminal of the power supply (190, 790, 890),
a second input terminal (104, 204, 304, 404, 504, 604, 704, 804) adapted to be connected to a second terminal of the power supply (190, 790, 890),
an output terminal (106, 206, 306, 406, 506, 606, 706, 806), a PTC element (110, 210, 310, 410, 510, 610, 710, 810) arranged between the first input terminal (102, 202, 302, 402, 502, 602, 702, 802) and the output terminal (106, 206, 306, 406, 506, 606, 706, 806), and
**characterised in that** the device further comprises
a heating element thermally coupled to the PTC element (110, 210, 310, 410, 510, 610, 710, 810) and adapted to increase the temperature of the PTC element (110, 210, 310, 410, 510, 610, 710, 810) in case the first input terminal (102, 202, 302, 402, 502, 602, 702, 802) is connected to the second terminal of the power supply and the second input terminal (104, 204, 304, 404, 504, 604, 704, 804) is connected to the first terminal of the power supply, thereby causing an increased electrical resistance between the first input terminal (102, 202, 302, 402, 502, 602, 702, 802) and the output terminal (106, 206, 306, 406, 506, 606, 706, 806).

2. The device according to claim 1, wherein
the heating element comprises a first resistor (220, 320, 420, 520, 620, 720, 820) arranged between the second input terminal and the output terminal, and/or
the heating element comprises a second resistor (222, 622, 722, 822) arranged between the second input terminal and the first input terminal.

3. The device according to claim 2, further comprising
a diode (330, 430, 778, 878) arranged between the second input terminal and the first resistor and/or between the second input terminal and the second resistor.

4. The device according to claim 2 or 3, further comprising
a transistor (550, 750, 850) arranged between the second input terminal and the first resistor and/or between the second input terminal and the second resistor, the transistor (550, 750, 850) being adapted to feed current to the first resistor and/or to the second resistor in case the first input terminal is connected to the second terminal of the power supply and the second input terminal is connected to the first terminal of the power supply.

5. The device according to claim 4, further comprising
a differential amplifier (770, 870) adapted to provide a control voltage representative of a voltage difference between the output terminal and a reference voltage to the transistor (550, 750, 850), thereby causing the transistor (550, 750, 850) to feed current to the first resistor and/or to the second resistor when said voltage difference exceeds a predetermined voltage value.

6. The device according to claim 4 or 5, further comprising
a temperature detector (880, 884) for detecting a temperature in the vicinity of the PTC element (810), and
a limiting element (886) adapted to reduce the feeding of current by the transistor (850) in case the temperature detected by the temperature detector (880, 884) exceeds a predetermined temperature value.

7. The device according to any of the preceding claims, wherein the device is formed as a single monolithic device (400).

8. The device according to claim 7, wherein the single monolithic device (400) comprises a thermally insulating housing (440).

9. The device according to any of the preceding claims, wherein the PTC element (110, 210, 310, 410, 510, 610, 710, 810) has a resistance of 1 mΩ or less at temperatures below a first temperature threshold and a resistance of 1 MΩ or more at temperatures above a second temperature threshold.

10. Method of protecting an electrically powered unit against reverse application of a power supply, the method comprising
detecting a reverse application of the power supply to the electrically powered unit, and
if a reverse application of the power supply is detected, increasing a temperature of a PTC element (110, 210, 310, 410, 510, 610, 710, 810) by means of a heating element which is thermally coupled to the PTC element, thereby causing an increased electrical resistance between a terminal of the power supply and a corresponding terminal of the electrically powered unit.

## Patentansprüche

1. Vorrichtung zum Schützen von mit elektrischer Leistung versorgten Einheiten (195, 695, 795, 895) vor einer umgekehrten Anwendung einer Leistungsversorgung (190, 790, 890), wobei die Vorrichtung Folgendes aufweist:
einen ersten Eingangsanschluss (102, 202, 302, 402, 502, 602, 702, 802), der dazu ausgelegt ist, mit einem ersten Anschluss der Leistungsversorgung (190, 790, 890) verbunden zu sein,
einen zweiten Eingangsanschluss (104, 204, 304, 404, 504, 604, 704, 804), der dazu ausgelegt ist, mit einem zweiten Anschluss der Leistungsversorgung (190, 790, 890) verbunden zu sein,
einen Ausgangsanschluss (106, 206, 306, 406, 506, 606, 706, 806), und
ein PTC-Element (110, 210, 310, 410, 510, 610, 710, 810), das zwischen dem ersten Eingangsanschluss (102, 202, 302, 402, 502, 602, 702, 802) und dem Ausgangsanschluss (106, 206, 306, 406, 506, 606, 706, 806) angeordnet ist,
**dadurch gekennzeichnet, dass** die Vorrichtung ferner Folgendes aufweist:
ein Heizelement, das an das PTC-Element (110, 210, 310, 410, 510, 610, 710, 810) thermisch gekoppelt ist und dazu ausgelegt ist, die Temperatur des PTC-Elements (110, 210, 310, 410, 510, 610, 710, 810) zu erhöhen, falls der erste Eingangsanschluss (102, 202, 302, 402, 502, 602, 702, 802) mit dem zweiten Anschluss der Leistungsversorgung verbunden ist und der zweite Eingangsanschluss (104, 204, 304, 404, 504, 604, 704, 804) mit dem ersten Anschluss der Leistungsversorgung verbunden ist, wodurch ein erhöhter elektrischer Widerstand zwischen dem ersten Eingangsanschluss (102, 202, 302, 402, 502, 602, 702, 802) und dem Ausgangsanschluss (106, 206, 306, 406, 506, 606, 706, 806) bewirkt wird.

2. Vorrichtung nach Anspruch 1, wobei
das Heizelement einen ersten Widerstand (220, 320, 420, 520, 620, 720, 820) aufweist, der zwischen dem zweiten Eingangsanschluss und dem Ausgangsanschluss angeordnet ist, und/oder
das Heizelement einen zweiten Widerstand (222, 622, 722, 822) aufweist, der zwischen dem zweiten Eingangsanschluss und dem ersten Eingangsanschluss angeordnet ist.

3. Vorrichtung nach Anspruch 2, die ferner Folgendes aufweist:
eine Diode (330, 430, 778, 878), die zwischen dem zweiten Eingangsanschluss und dem ersten Widerstand und/oder zwischen dem weiten Eingangsanschluss und dem zweiten Widerstand angeordnet ist.

4. Vorrichtung nach Anspruch 2 oder 3, die ferner
einen Transistor (550, 750, 850) aufweist, der zwischen dem zweiten Eingangsanschluss und dem ersten Widerstand und/oder zwischen dem zweiten Eingangsanschluss und dem zweiten Widerstand angeordnet ist, wobei der Transistor (550, 750, 850) dazu ausgelegt ist, dem ersten Widerstand einen Strom zuzuführen und/oder dem zweiten Widerstand einen Strom zuzuführen, falls der erste Eingangsanschluss mit dem zweiten Anschluss der Leistungsversorgung verbunden ist und der zweite Eingangsanschluss mit dem ersten Anschluss der Leistungsversorgung verbunden ist.

5. Vorrichtung nach Anspruch 4, die ferner
einen Differenzverstärker (770, 870) aufweist, der dazu ausgelegt ist, eine Steuerspannung, die für eine Spannungsdifferenz zwischen dem Ausgangsanschluss und einer Referenzspannung charakteristisch ist, an den Transistor (550, 750, 850) anzulegen, wodurch bewirkt wird, dass der Transistor (550, 750, 850) dem ersten Widerstand Strom zuführt und/oder dem zweiten Widerstand Strom zuführt, wenn die Spannungsdifferenz einen vorgegebenen Spannungswert überschreitet.

6. Vorrichtung nach Anspruch 4 oder 5, die ferner Folgendes umfass:
einen Temperaturdetektor (880, 884) zum Detektieren einer Temperatur in der Umgebung des PTC-Elements (810) und
ein Begrenzungselement (886), das dazu ausgelegt ist, das Zuführen von Strom durch den Transistor (850) zu verringern, falls die Temperatur, die durch den Temperaturdetektor (880, 884) detektiert worden ist, einen vorgegebenen Temperaturwert überschreitet.

7. Vorrichtung nach einem der vorhergehenden Ansprüche, wobei die Vorrichtung als eine einzelne monolithische Vorrichtung (400) gebildet ist.

8. Vorrichtung nach Anspruch 7, wobei die einzelne monolithische Vorrichtung (400) ein thermisch isolierendes Gehäuse (440) aufweist.

9. Vorrichtung nach einem der vorhergehenden Ansprüche, wobei das PTC-Element (110, 210, 310, 410, 510, 610, 710, 810) einen Widerstand von 1 mΩ oder weniger bei Temperaturen unterhalb eines ersten Temperaturgrenzwerts und einen Widerstand von 1 MΩ oder mehr bei Temperaturen oberhalb eines zweiten Temperaturgrenzwerts besitzt.

10. Verfahren zum Schützen einer mit elektrischer Leistung versorgten Einheit vor einer umgekehrten Anwendung einer Leistungsversorgung, wobei das Verfahren Folgendes aufweist:
Detektieren einer umgekehrten Anwendung der Leistungsversorgung an die mit elektrischer Leistung versorgte Einheit und,
falls eine umgekehrte Anwendung der Leistungsversorgung detektiert wird, Erhöhen einer Temperatur eines PTC-Elements (110, 210, 310, 410, 510, 610, 710, 810) mittels eines Heizelements, das an das PTC-Element thermisch gekoppelt ist, wodurch ein erhöhter elektrischer Widerstand zwischen einem Anschluss der Leistungsversorgung und einem entsprechenden Anschluss der mit elektrischer Leistung versorgten Einheit bewirkt wird.

## Revendications

1. Dispositif de protection d'unités alimentées électriquement (195, 695, 795, 895) contre une application inverse d'une alimentation électrique (190, 790, 890), le dispositif comprenant
une première borne d'entrée (102, 202, 302, 402, 502, 602, 702, 802) adaptée pour être connectée à une première borne de l'alimentation électrique (190, 790, 890),
une seconde borne d'entrée (104, 204, 304, 404, 504, 604, 704, 804) adaptée pour être connectée à une seconde borne de l'alimentation électrique (190, 790, 890),
une borne de sortie (106, 206, 306, 406, 506, 606, 706, 806) ;
un élément PTC (110, 210, 310, 410, 510, 610, 710, 810) agencé entre la première borne d'entrée (102, 202, 302, 402, 502, 602, 702, 802) et la borne de sortie (106, 206, 306, 406, 506, 606, 706, 806), et
**caractérisé en ce que** le dispositif comprend en outre un élément chauffant couplé thermiquement à l'élément PTC (110, 210, 310, 410, 510, 610, 710, 810) et adapté pour augmenter la température de l'élément PTC (110, 210, 310, 410, 510, 610, 710, 810) au cas où la première borne d'entrée (102, 202, 302, 402, 502, 602, 702, 802) est connectée à la seconde borne de l'alimentation électrique et la seconde borne d'entrée (104, 204, 304, 404, 504, 604, 704, 804) est connectée à la première borne de l'alimentation électrique, entraînant de ce fait une résistance électrique accrue entre la première borne d'entrée (102, 202, 302, 402, 502, 602, 702, 802) et la borne de sortie (106, 206, 306, 406, 506, 606, 706, 806).

2. Dispositif selon la revendication 1, dans lequel l'élément chauffant comprend une première résistance (220, 320, 420, 520, 620, 720, 820) agencée entre la seconde borne d'entrée et la borne de sortie, et/ou l'élément chauffant comprend une seconde résistance (222, 622, 722, 822) agencée entre la seconde borne d'entrée et la première borne d'entrée.

3. Dispositif selon la revendication 2, comprenant en outre une diode (330, 430, 778, 878) agencée entre la seconde borne d'entrée et la première résistance et/ou entre la seconde borne d'entrée et la seconde résistance.

4. Dispositif selon la revendication 2 ou 3, comprenant en outre
un transistor (550, 750, 850) agencé entre la seconde borne d'entrée et la première résistance et/ou entre la seconde borne d'entrée et la seconde résistance, le transistor (550, 750, 850) étant adapté pour alimenter en courant la première résistance et/ou la seconde résistance au cas où la première borne d'entrée est connectée à la seconde borne de l'alimentation électrique et la seconde borne d'entrée est connectée à la première borne de l'alimentation électrique.

5. Dispositif selon la revendication 4, comprenant en outre un amplificateur différentiel (770, 870) adapté pour fournir au transistor (550, 750, 850) une tension de commande représentative d'une différence de tension entre la borne de sortie et une tension de référence, amenant ainsi le transistor (550, 750, 850) à alimenter en courant la première résistance et/ou la seconde résistance quand ladite différence de tension dépasse une valeur de tension prédéterminée.

6. Dispositif selon la revendication 4 ou 5, comprenant en outre
un détecteur de température (880, 884) pour détecter une température au voisinage de l'élément PTC (810), et
un élément limitateur (886) adapté pour réduire l'alimentation de courant par le transistor (850) au cas où la température détectée par le détecteur de température (880, 884) dépasse une valeur de température prédéterminée.

7. Dispositif selon l'une quelconque des revendications précédentes, dans lequel le dispositif est formé sous forme de dispositif monolithique unique (400).

8. Dispositif selon la revendication 7, dans lequel le dispositif monolithique unique (400) comprend un boîtier thermiquement isolant (440).

9. Dispositif selon l'une quelconque des revendications précédentes, dans lequel l'élément PTC (110, 210, 310, 410, 510, 610, 710, 810) a une résistance de mΩ ou moins aux températures inférieures à un premier seuil de température et une résistance de mΩ ou plus aux températures supérieures à un second seuil de température.

10. Procédé de protection d'une unité alimentée électriquement contre l'application inverse d'une alimentation électrique, le procédé comprenant
la détection d'une application inverse de l'alimentation électrique à l'unité alimentée électriquement, et
si une application inverse de l'alimentation électrique est détectée, l'augmentation d'une température d'un élément PTC (110, 210, 310, 410, 510, 610, 710, 810) au moyen d'un élément chauffant qui est couplé thermiquement à l'élément PTC, entraînant ainsi une résistance électrique accrue entre une borne de l'alimentation électrique et une borne correspondante de l'unité alimentée électriquement.
